# EUROPÄISCHE PATENTSCHRIFT

(11) **EP 1 288 399 B1**
(45) Veröffentlichungstag und Bekanntmachung des Hinweises auf die Patenterteilung: **12.07.2006**
(21) Anmeldenummer: 02005194.2
(22) Anmeldetag: 08.03.2002
(51) Int. Cl.: E04H 15/48, E04H 15/46

(54) **Winkelbaugruppe**
Angle building unit
Unité de construction pour angles

(30) Priorität: 17.05.2001 DE 10124306
(43) Veröffentlichungstag der Anmeldung: 05.03.2003
(73) Patentinhaber: EA Metallbau GmbH, D-88316 Isny-Grossholzleute (DE)
(72) Erfinder: King, Bernd, 88316 Isny (DE); Brutscher, Peter, 87490 Haldenwang-Börwang (DE)
(74) Vertreter: Kloiber, Thomas

(56) Entgegenhaltungen:
- EP-A- 0 893 557
- DE-A- 19 834 388
- FR-A- 2 339 029
- FR-A- 2 349 298

## Beschreibung

Die Erfindung betrifft eine Winkelbaugruppe gemäß dem Oberbegriff des Anspruchs 1.

Eine derartige Winkelverbindung zwischen verschiedenen Streben ist aus der Schrift der Anmelderin EP 0 893 557 A1 bekannt. Sie wird zur Verbindung von Streben verwendet.

Derartige Bauteile haben den Nachteil, dass sie als starre Bauteile keine flexible Anpassung der Winkel wie zwischen durch Winkelverbindungen verbundenen Stangen ermöglichen. Hingegen kann eine flexible Anpassung der Winkel beispielsweise zum Erleichtern des Gerüstaufbaus bei Zeltgestängen oder beim Aufstellen auf unebenem Untergrund oder Variieren der Giebelwinkel wünschenswert sein, die auch freitragende Vordächer erlaubt.

Aufgabe der Erfindung ist es, eine Winkelbaugruppe mit einem Hauptrohr zur Aufnahme eines Endstücks vorzusehen und eine hohe Variabilität an Verbindungen von Stangen, Streben der anderen stabförmigen Elementen bei überschaubarem Montageaufwand zu ermöglichen, die auch das Anschließen eines frei tragenden Vordachs erlaubt.

Diese Aufgabe wird bei einer gattungsgemäße Winkelbaugruppe erfingdungsgemäß dadurch gelöst, dass die Löcher wenigstens einer Gabel für ein weiteres Rohr als Führungsschlitz ausgebildet sind, wobei das weitere Rohr bei einer Extremstellung des mit dem weiteren Rohr verbundenen Bolzens in dem Führungsschlitz, wobei dieser Bolzen in größtmöglicher Nähe zum Hauptrohr angeordnet ist, einen Formschluss mit dem Hauptrohr oder daran feststehend angeordneten Teilen ausbildend angeordnet ist, wobei der Formschluss durch einen Eingriff des Rohrendes oder eines Vorsprungs am Rohrende des weiteren Rohres in ein in dem Hauptrohr zwischen zwei Schamiergabelschenkeln vorgesehenes Loch erfolgt.

An dem Hauptrohr wird eine hohe Variabilität an Stellungen der durch die Winkelbaugruppe verbundenen Elemente wie Stangen ermöglicht. Zudem kann beim Anbringen einer Rohrstange an der Winkelverbindung eine andere Winkelstellung gewählt werden als jene die dem Winkel an der Verbindung bei einem fertig aufgestellten Gerüst entspricht, was die Montage eines Gerüsts erleichtem kann. Weitere Variabilität ergibt sich dadurch, dass das Hauptrohr zur Aufnahme eines Endstücks vorgesehen ist, wobei es mit anderen Elementen oder Stangen mit einem Endstück unterschiedlicher Länge und Bauart verbunden werden kann. Sind Endstücke an der Winkelbaugruppe der Erfindung vorgesehen, so können diese bevorzugt als Verknüpfungselemente für dafür vorgesehene Elemente oder Stangen in einem Gerüst dienen.

Wenigstens eines der Löcher der Rohre oder Gaben einer Winkelbaugruppe ist nach der Erfindung als Führungsschlitz ausgebildet und erlaubt so gezielte Verschiebungen oder Stellungspositionen der Rohre relativ zu dem Hauptrohr.

Weitere vorteilhafte Ausführungen der Winkelbaugruppe mit als Führungsschlitz ausgebildeten Rohrlöchem weisen annähernd schrauben-, S- oder Z-förmige Ausgestaltungen der Führungsschlitze zur Aufnahme des Bolzens auf, die in wenigstens einem der an den Gelenken angeordneten Rohre verlaufen. Diese Ausführungen erlauben somit gezielte vorbestimmte Verschiebungen oder Stellungspositionen der Rohre und können in jeder dem Fachmann bekannten Weise ausgeführt werden.

Eine günstige Ausführung der Erfindung kann auch eine Winkelbaugruppe mit als Führungsschlitz ausgebildeten Rohrlöchern sein, wobei die Führungsschlitze annähernd einen Bogen oder Halbbogen bildend ausgebildet sind, wobei die Bogenenden in Einsatzposition der Winkelbaugruppe, beispielsweise am oberen Ende einer Stützstange eines Zeltgestänges, vorzugsweise unterhalb des Bogenscheitelpunktes angeordnet sind. Diese Ausführung ermöglicht bei bestimmten Einbaupositionen eine Bewegung eines mit Bolzen versehenen Bauteils, z.B. eines der Rohre zwischen einer labilen Lage, beispielsweise am Bogenende und einer stabilen Lage, beispielsweise am Bogenscheitelpunkt (oder umgekehrt), was ein Einrücken dieses Bauteils, z.B. Rohres in eine Endposition beim Gerüstaufbau erleichtern kann.

Vorteilhaft ist weiter eine Ausführung der erfindungsgemäßen Winkelbaugruppe mit als Führungsschlitz ausgebildeten bogenförmigen Rohrlöchern, wobei das Ende des Rohres, welches dem Hauptrohr zugewandt ist, bei einer Extremstellung des mit dem Rohr verbundenen Bolzens in dem Führungsschlitz, wobei der Bolzen in größtmöglicher Nähe zum Hauptrohr angeordnet ist, einen Formschluss mit dem Hauptrohr oder daran feststehend angeordneten Teilen ausbildend angeordnet ist, wobei der Formschluss vorzugsweise durch einen Eingriff des Rohrendes oder eines Vorsprungs am Rohrende in ein in dem Hauptrohr zwischen zwei Schamiergabelschenkeln vorgesehenes Loch erfolgt. Dadurch ist vorteilhaft ein Arretiermechanismus vorgesehen.

Vorteilhaft sind bei der Winkelbaugruppe der Erfindung die Gelenke sternförmig an dem Hauptrohr angeordnet und können so beispielsweise die Verbindung von Streben in mehrere Richtungen mit dem als Stützstange dienenden Hauptrohr bilden.

Weitere Vorteile ergeben sich durch eine lösbare Anordnung der Gelenke an dem Hauptrohr, wodurch dieses variabei z.B. vom Anwender mit den Gelenkverbindungen bestückt werden kann. Dabei kommen alle dem Fachmann bekannten lösbaren Verbindungen wie Steckverbindungen in Betracht.

Bevorzugt sind die Gelenke der Winkelbaugruppe arretierbar ausgebildet, wodurch sie z.B. beim Gerüstaufbau flexibel beweglich und nach Arretierung eine stabile starre Verbindung ausbildend sein können. Dazu kommen alle dem Fachmann bekannten Arretierungen wie beispielsweise eine Arretierung, bei denen die Bolzen als mit Muttern versehene Schrauben mit einem Klemmring zwischen einem Schenkel und einem auf der Bolzenachse angeordneten Element ausgebildet sind, in Betracht.

Vorteilhaft ist eine Winkelbaugruppe nach der Erfindung, wobei wenigstens eines der Endstücke als Endbeschläge, vorzugsweise mit annährend zylindrisch ausgeformten Enden und mit vorzugsweise dreieckigen Vorsprüngen zum Einrasten in Rohrumfansaussparungen ausgebildet sind. Als derartige Endstücke kommen, z.B. jene in DE 198 12 281 A1 offenbarten Elemente in Betracht.

Eine Ausführung der Winkelbaugruppe, wobei die Endstücke insbesondere im wesentlichen dreieckige Vorsprünge aufweisen und das Hauptrohr eine insbesondere zu diesen Vorsprüngen komplementäre Umfangsaussparung aufweiset, die gegebenenfalls auch wenigstens eines der mit dem Hauptrohr verbundenen Rohre aufweisen kann, hat den Vorteil, dass an vielen, vorzugsweise an allen Enden Verbindungsteile, wie von einem Zeltgestänge verbindbar, bzw. einklinkbar sind. Dazu können Verbindungsteile dienen, die die gleichen Umfangsaussparungen wie beispielsweise das Hauptrohr und/oder Rohre der Winkelbaugruppe und die gleiche annährend zylinderförmige Enden mit annähernd dreieckigen Vorsprüngen wie Endstücke der Winkelbaugruppe aufweisen. Die Erfindung betrifft ebenso eine Kombination aus wenigstens einer der oben beschriebenen Winkelbaugruppe nach der Erfindung und vorzugsweise rohrförmigen Verbindungsteilen, wobei jedes dieser Verbindungsteile an wenigstens einem seiner Enden die an der Winkelbaugruppe vorgesehenen Umfangsaussparungen und/oder die an der Winkelbaugruppe, insbesondere an den Endstücken der Winkelbaugruppe vorgesehenen Vorsprünge aufweist. Auf diese Weise ist ein System von Teilen geschaffen, die bei standardisierten Endpartien, wie dreieckigen Umfangsaussparungen und Rohrenden mit dreieckigen Vorsprüngen leicht miteinander verbindbar sind und somit vorteilhaft als Zeltgestänge dienen können. Dazu kommen insbesondere einklinkbare Verbindungen der in DE 198 12 281 offenbarten Art in Betracht,

Die Erfindung wird nachfolgend in Ausführungsbeispielen anhand der Zeichnungen, in den funktionsmäßig gleiche Teile mit den gleichen Bezugszeichen versehen sind, veranschaulicht, ohne darauf beschränkt zu sein.

Die Abbildungen zeigen im einzelnen:
Figur 1: eine Winkelverbindung gemäß der Erfindung mit vier sternförmig an dem Hauptrohr angeordneten Gelenkverbindungen;
Fig. 2: eine Seitenansicht der in Fig. 1 gezeigten Winkelbaugruppe bei senkrecht stehendem Hauptrohr;
Fig. 3: einen Teil der in den Figuren 1 und 2 dargestellten Winkelbaugruppe, nämlich das Hauptrohr mit daran angeordneten Gabeln für Schamierverbindungen;
Fig. 4: eine Draufsicht des in Fig. 3 dargestellten Bauteiles;
Fig. 5: eine andere, nicht erfindungsgemaße Ausführung einer Winkelbaugruppe mit zwei an einem Hauptrohr angeordneten Gelenkverbindungen bei waagerecht liegendem Hauptrohr;
Fig. 6: eine Draufsicht der in Fig. 5 dargestellten Winkelbaugruppe;
Fig. 7: eine Draufsicht eines Bauteiles, der in den Figuren 5 und 6 dargestellten Winkelbaugruppe, nämlich das Hauptrohr mit daran angeordneten Gabeln von Schamierverbindungen; und
Fig. 8: eine Seitenansicht des in Fig. 7 als Draufsicht dargestellten Bauteils.

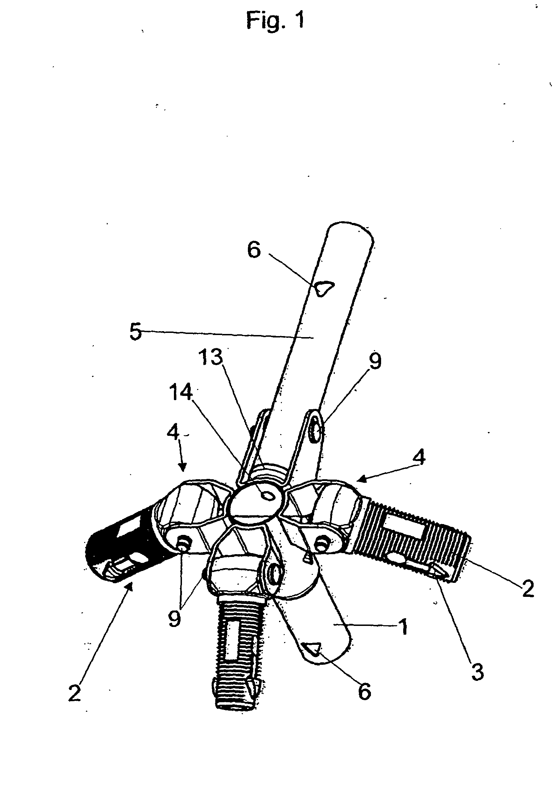

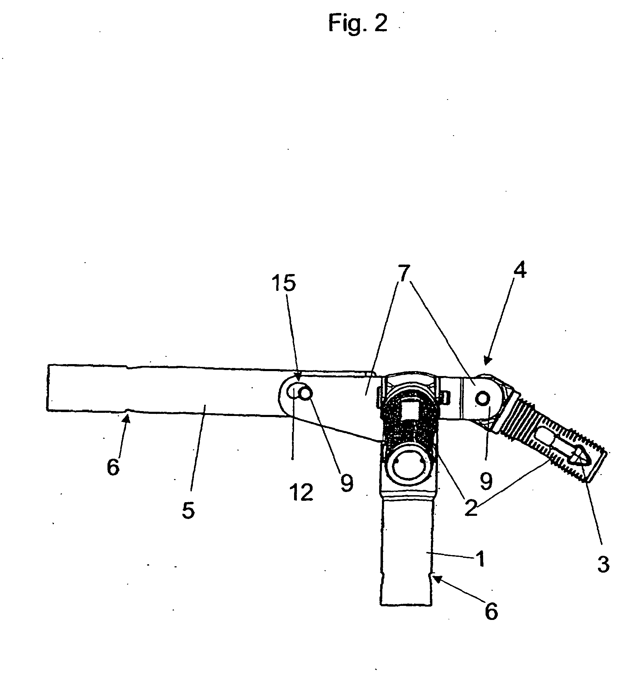

Die in Fig. 1 bis 4 dargestellte Ausführung einer Winkelbaugruppe umfasst ein für eine senkrechte Tragstangenverbindung vorgesehenes Hauptrohr 1, das in seinem unteren Teil eine Umfangsaussparung 6 aufweist und eine weitere (nicht dargestellte) dazu gegenüberliegende komplementäre Umfangsaussparung. Letztere sind zum Einklinken von Verlängerungstangen in dieses Hauptrohr 1 vorgesehen. Am oberen Ende des Hauptrohres 1 aus Metall sind sternförmig vier annähernd U-förmige Gabeln 17 aus Metallblech angeschweißt, welche mit ihren gabelförmigen Schenkeln sternförmig von dem Hauptrohr 1 nach außen weisen und die in Nähe der Schenkelenden jeweils gleich beabstandete Löcher 8 aufweisen. Zwischen zwei benachbarten Gabeln 17 ist dabei je ein 90°-Winkel ausgebildet.

Bei der in Fig.1 gezeigten Darstellung ist das Hauptrohr 1 senkrecht und annähernd in Einbaustellung in einem Zeltgestänge (nicht dargestellt) aufgestellt.

Hingegen sind bei einer der Gabeln 17 diese Löcher als Führungsschlitze 12 ausgebildet, die einem in den Führungsschlitzen 12 gelagerten Bolzen 9 eine bogenförmige Bahn zur Verfügung stellen, in welcher der Bolzen 9 gegenüber dem Hauptrohr 1 verschiebbar ist. Dieser durch die Führungsschlitze 12 umschriebene Bogen umfasst einen Scheitelpunkt, der vertikal in Richtung der Mittellinie 11 des senkrecht aufgestellten Hauptrohres 1 nach oben weist, während die Bogenenden unterhalb dieses Scheitelpunktes gelegen sind. Zwischen diesen Schenkeln ist auf dem Bolzen 9 ein Rohr 5 gelagert, welches durch den Bolzen 9 gehalten wird. Dieses Rohr 5 ist durch die von den Führungsschlitzen 12 ermöglichte Bolzenverschiebung zu dem Hauptrohr 1 hin bzw. von dem Hauptrohr 1 weg, verschiebbar.

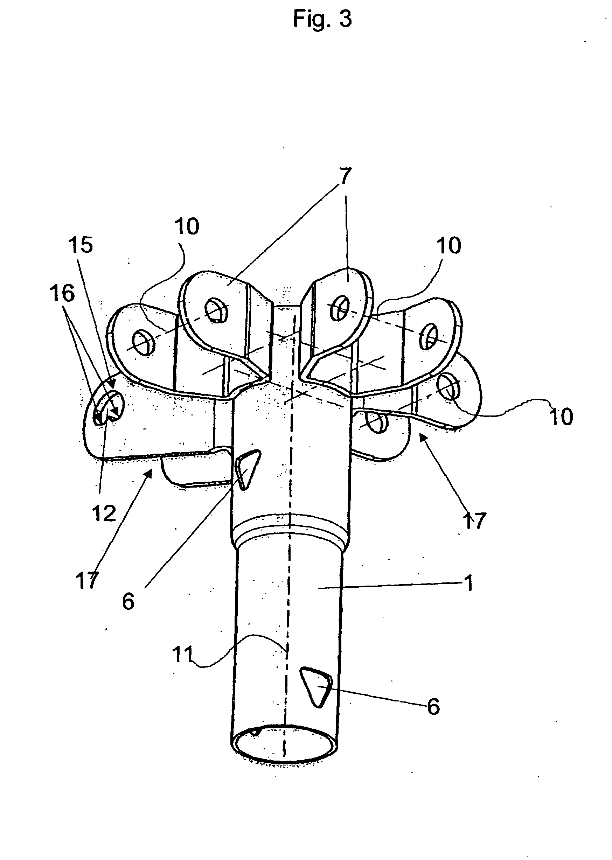

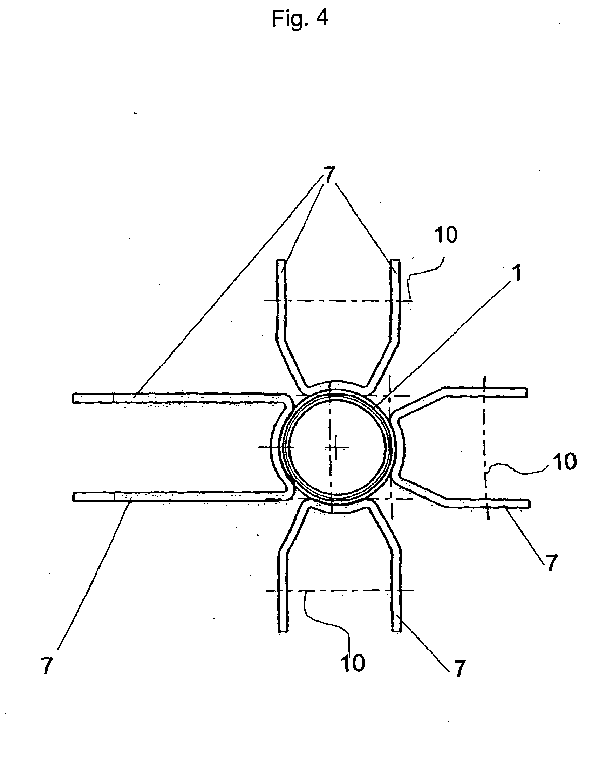

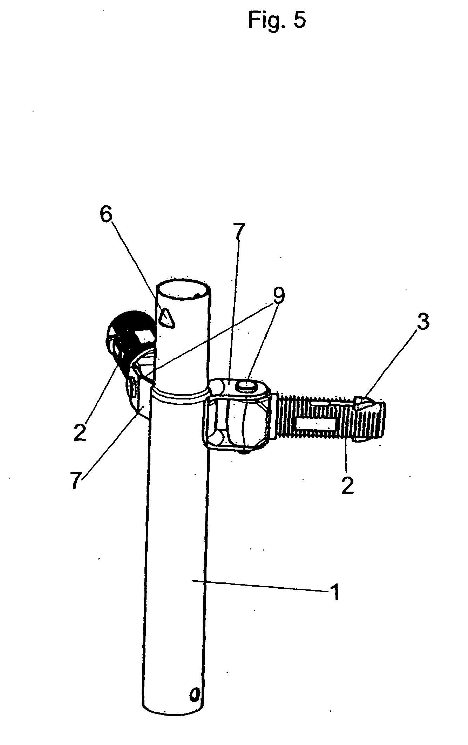

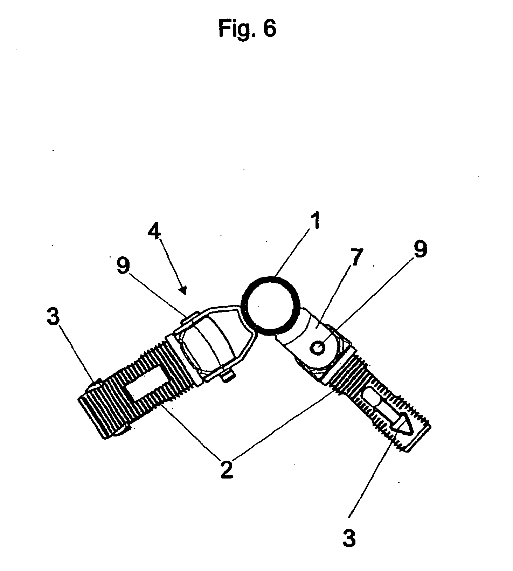

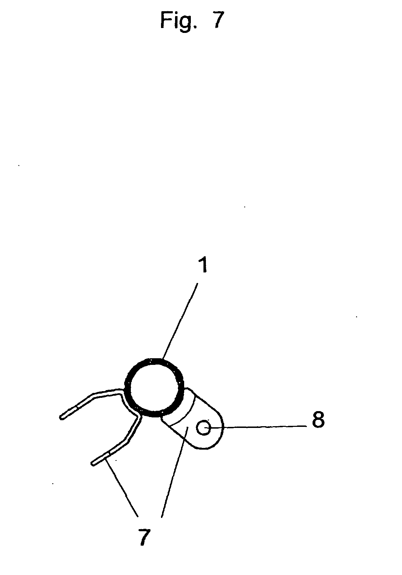

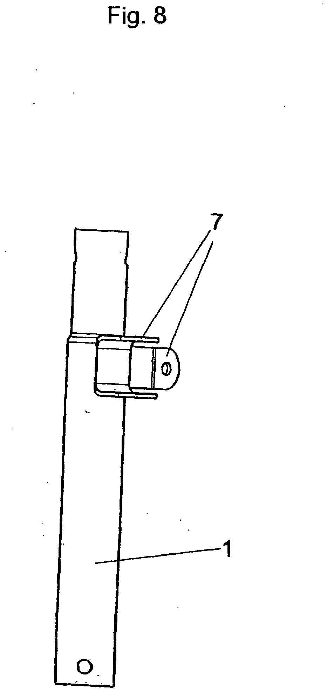

Am vorderen Ende 13 des Rohres 5, welches das dem Hauptrohr 5 zugewandte Ende des Rohres 5 ist, ist in Längsrichtung des Rohres 5 ein Stift angebracht (nicht dargestellt), der bei nächstmöglicher Position des Rohres 5 zu dem Hauptrohr 1 in ein im oberen Teil des Hauptrohres 1 vorgesehenes Loch 14 hineinrutscht, wodurch eine Arretierung des Rohres 5 gewährleistet wird: Das Rohr 5 kann in dieser Stellung nicht mehr relativ zu dem Hauptrohr 1 bewegt werden und bildet mit diesem eine starre Verbindung. Wird das Rohr 5, z.B. durch eine aufliegende Zeltplane nach unten gedrückt, so wird diese arretierte Position aufgrund der bogenförmig ausgebildeten Führungsschlitze 12 festgehalten. In der Nähe seines von dem mit einem Stift versehenen Vorderende 13 abgewandten Endes umfasst das Rohr 5 ebenfalls eine Umfangsaussparung 6 zum Einklinken weiterer Verbindungselemente. Bei den übrigen Gabeln 17 erstrecken sich ebenfalls gleichartige Bolzen 9 durch Löcher von Endstücken, welche Endbeschläge der in DE 198 12 281 A1 beschriebenen Art sind. Diese Endbeschläge 2 weisen Vorsprünge 3 auf, die zum Einklinken weiterer Rohrstangenelemente vorgesehen sind. Die Bolzenachsen, von denen in Figur 3 und 4 jene drei der nicht in Führungsschlitzen gelagerten Bolzen dargestellt sind, stehen in dieser Ausführung alle transversal zur Mittellinie 11 des Hauptrohres 1. Die in den Figuren 5 bis 8 gezeigte Ausführung, die nicht durch die Merkmale von Anspruch 1 beschrieben wird, unterscheidet sich von jener in den Figuren 1 bis 4 dargestellten dadurch, dass:
- an dem Hauptrohr 1 lediglich zwei Gelenkverbindungen angeordnet sind, welche wie bei der obigen Ausführung in einem Winkel von 90° zueinander stehen,
- eine Umfangsaussparung in dem Hauptrohr 1 zum Einklinken weiterer Stangenelemente bei senkrechter Stellung des Hauptrohres 1 im oberen Teil dieses Hauptrohres 1, oberhalb der daran angebrachten Gabelschenkel 7 vorgesehen ist,
- ausschließlich Gelenkverbindungen ohne Führungsschlitze und nur mit Endstücken 2, der bei der obigen Ausführungsform geschilderten Art vorhanden sind, und
- eine der Bolzenachsen parallel zur Mittellinie des Hauptrohres1 angeordnet ist, während die andere Bolzendrehachse transversal zur Mittellinie des Hauptrohres 1 angeordnet ist.

Auf diese Weise ist durch die Erfindung eine Winkelbaugruppe mit einem Hauptrohr zur Aufnahme eines Endstücks geschaffen, die eine hohe Variabilität an Verbindungen von Stangen bei überschaubarem Montageaufwand ermöglicht.

Die Erfindung ist oben insbesondere als Bauteil eines Zeltgestänges beschrieben worden, sie kann aber ohne den Rahmen der Erfindung zu verlassen anderweitig, wie allgemein bei Gerüsten oder Baugerüsten oder Trägerkonstruktion mit Stangen, Streben der anderen stabförmigen oder länglichen Elementen wie z.B. für Bauwerke verwendet werden.

### BEZUGSZEICHENLISTE

- 1.: Hauptrohr
- 2.: Endstück
- 3.: Vorsprung
- 4.: Gelenkverbindung
- 5.: Rohr
- 6.: Umfangsaussparung
- 7.: Schenkel
- 8.: Loch
- 9.: Bolzen
- 10.: Bolzendrehachse
- 11.: Mittellinie des Hauptrohres
- 12.: Führungsschlitz
- 13.: Rohrende
- 14.: Loch in dem Hauptrohr
- 15.: Bogenscheitelpunkt
- 16.: Bogenenden
- 17.: Gabel

## Patentansprüche

1. Winkelbaugruppe mit einem Hauptrohr (1) zur Aufnahme eines Endstückes, wobei das Hauptrohr (1) vorzugsweise zumindest eine Umfangsaussparung aufweist, die zum Einrasten eines Vorsprungs des Endstückes vorgesehen ist, wobei an dem Hauptrohr (1) wenigstens eine Gelenkverbindung (4) zu wenigstens einem weiteren Rohr (5) und gegebenfalls eine weitere Gelenkverbindung zu wenigstens einem weiteren Endstück (2) angeordnet ist, wobei die Gelenkverbindungen als Schamiergelenke ausgebildet sind und wobei jedes Schamiergelenk in Form von an dem Hauptrohr (1) angeordneten Gabeln ausgebildet ist, deren Schenkel (7) mit Löchern (8) zur Aufnahme von Bolzen (9) versehen sind, **dadurch gekennzeichnet, dass** die Löcher wenigstens einer Gabel für ein weiteres Rohr als Führungsschlitz (12) ausgebildet sind, wobei das weitere Rohr (5) bei einer Extremstellung des mit dem weiteren Rohr (5) verbundenen Bolzens (9)in dem Führungsschlitz, wobei dieser Bolzen (9) in größtmöglicher Nähe zum Hauptrohr (1) angeordnet ist, einen Formschluss mit dem Hauptrohr (1) oder daran feststehend angeordneten Teilen ausbildend angeordnet ist, wobei der Formschluss durch einen Eingriff des Rohrendes (13) des weiteren Rohres (5) oder eines Vorsprungs am Rohrende (13) des weiteren Rohres (5) in ein in dem Hauptrohr (1) zwischen zwei Schamiergabelschenkeln (7) vorgesehenes Loch (14) erfolgt.

2. Winkelbaugruppe nach Anspruch 1, **dadurch gekennzeichnet, dass** zwei vorzugsweise annähernd schrauben-, S- oder Z-förmige Führungsschlitze (12) zur Aufnahme des Bolzens (9) in wenigstens einem der an den Gelenkverbindung (4) angeordneten weiteren Rohre (5) verlaufen.

3. Winkelbaugruppe nach einem der Ansprache 1 oder 2, **dadurch gekennzeichnet, dass** die Führungsschlitze (12) annähernd einen Bogen oder Halbbogen bildend ausgebildet sind, wobei die Bogenenden in Einsatzposition der Winkelbaugruppe vorzugsweise unterhalb des Bogenscheitelpunktes angeordnet sind.

4. Winkelbaugruppe nach einem der vorhergehenden Ansprüche, **dadurch gekennzeichnet, dass** wenigstens eines der Endstücke (2) als Endbeschläge, vorzugsweise mit annährend zylindrisch ausgeformten Enden und mit vorzugsweise dreieckigen Vorsprüngen (3) zum Einrasten in Rohrumfansaussparungen (6) ausgebildet sind.

5. Kombination aus wenigstens einer Winkelbaugruppe nach einem der vorhergehenden Ansprüche und vorzugsweise rohrförmigen Verbindungsteilen, **dadurch gekennzeichnet, dass** jedes dieser Verbindungsteile an wenigstens einem seiner Enden die an der Winkelbaugruppe vorgesehenen Umfangsaussparungen und/oder die an der Winkelbaugruppe, insbesondere an den Endstücken (2) der Winkelbaugruppe vorgesehenen Vorsprünge aufweist.

6. Winkelbaugruppe nach einem der vorhergehenden Ansprüche, **dadurch gekennzeichnet, dass**wenigstensdie Gelenkverbindungen (4) sternförmig an dem Hauptrohr (1) angeordnet sind.

7. Winkelbaugruppe nach einem der vorhergehenden Ansprüche, **dadurch gekennzeichnet, dass** wenigstens eine der Gelenkverbindungen (4) lösbar an dem Hauptrohr (1) angeordnet ist.

8. Winkelbaugruppe nach einem der vorhergehenden Ansprüche, **dadurch gekennzeichnet, dass** wenigstenseineder Gelenkverbindungen (4) arretierbar ausgebildet ist.

9. Winkelbaugruppe nach einem der vorhergehenden Ansprüche, **dadurch gekennzeichnet, dass** wenigstens eines der über wenigstens eine der Gelenkverbindungen (4) mit dem Hauptrohr (1) verbundenen weiteren Rohre (5) eine Umfangsaussparung (6) aufweist, die zum Einrasten des Vorsprungs des Endstückes (2) vorgesehen ist.

## Claims

1. An angle building unit with a main tube (1) for the reception of an end piece, wherein the main tube (1) preferably has at least one circumferential cut-out, which is fitted for engagement of a projection of the end piece, wherein on the main tube (1) at least one articulated joint (4) is assigned to at least one further tube (5) and, if necessary, one further articulated joint is assigned to least one further end piece, wherein the articulated joints are configured as pin joints and wherein each pin joint is configured in the form of forks located on the main tube (1), the legs (7) of which are fitted with holes (8) for the reception of bolts (9), **characterised in that** the holes of at least one fork are configured as a guide slot (12) for a further tube, wherein for an extreme setting of the bolt (9) connected with the further tube (5), this bolt (9) being located as close as possible to the main tube (1), the further tube (5) is located so as to form a form joint with the main tube (1) or with parts that are fixed to it, wherein the form joint is achieved by means of an engagement of the tube end (13) of the further tube (5), or of a projection on the tube end (13) of the further tube (5), in a hole (14) fitted in the main tube (1) between two articulated fork joint legs (7).

2. The angle building unit according to claim 1, **characterised in that** two preferably approximately helical, S-shaped or Z-shaped guide slots (12) for the reception of the bolt (9) run in at least one of the further tubes (5) located on the articulated joint (4).

3. The angle building unit according to one of the claims 1 or 2, **characterised in that** the guide slots (12) are approximately configured in the form of an arc or semi-arc, wherein in the working position of the angle building unit the ends of the arc are preferably located underneath the apex point of the arc.

4. The angle building joint according to one of the previous claims, **characterised in that** at least one of the end pieces (2) are configured as end fittings, preferably with approximately cylindrically shaped ends (2) and with preferably triangular projections (3) for engagement in the tube circumferential cutouts (6).

5. A combination of at least one angle building unit according to one of the previous claims and preferably tubular connecting parts, **characterised in that** each of these connecting parts has the circumferential cutouts fitted on the angle building unit on at least one of its ends and/or has the projections fitted on the angle building unit, in particular on the end pieces (2) of the angle building unit.

6. The angle building unit according to one of the previous claims, **characterised in that** at least one of the articulated joints (4) is located on the main tube (1) in a star-shaped manner.

7. The angle building unit according to one of the previous claims, **characterised in that** at least one of the articulated joints (4) is located on the main tube (1) in a releasable manner.

8. The angle building unit according to one of the previous claims, **characterised in that** at least one of the articulated joints (4) is configured so that it can be locked in position.

9. The angle building joint according to one of the previous claims, **characterised in that** at least one of the further tubes (5) connected with the main tube (1) via at least one of the articulated joints (4) has a circumferential cut-out (6), which is fitted for engagement of the projection of the end piece (2).

## Revendications

1. Ensemble d'angle comprenant un tube principal (1) pour le logement d'une pièce d'extrémité, le tube principal (1) présentant de préférence au moins un évidement périphérique qui est prévu pour l'encliquetage d'une saillie de la pièce d'extrémité, au moins une liaison articulée (4) avec au moins un autre tube (5) et/ou éventuellement une autre liaison articulée avec au moins une autre pièce d'extrémité étant disposée sur le tube principal (1), les liaisons articulées étant conçues comme des articulations à charnière et chaque articulation à charnière étant réalisée sous la forme de fourches (3) disposées sur le tube principal (1), dont les branches (7) sont dotées de trous (8) pour le logement de boulons (9), **caractérisé en ce que** les trous d'au moins une fourche pour un autre tube sont conçus comme fente de guidage (12), l'autre tube (5) étant disposé en formant une conjugaison de forme avec le tube principal (1) ou des parties disposées de façon fixe dessus dans une position extrême du boulon (9) relié à l'autre tuyau (6) dans la fente de guidage, ce boulon (9) étant disposé à proximité la plus grande possible du tube principal (1), la conjugaison de forme s'effectuant par un engagement de l'extrémité du tube (13) de l'autre tube (5) ou d'une saillie sur l'extrémité du tube (13) de l'autre tube (5) dans un trou (14) prévu dans le tube principal (1) entre deux branches de fourche à charnière (7).

2. Ensemble d'angle selon la revendication 1, **caractérisé en ce que** deux fentes de guidage (12) de préférence approximativement en forme de vis, de S ou de Z sont agencées pour le logement du boulon (9) sur au moins un autre tube (5) disposés sur les liaisons articulées (4).

3. Ensemble d'angle selon l'une quelconque des revendications 1 ou 2, **caractérisé en ce que** les fentes de guidage (12) sont réalisées en formant approximativement un arc ou un demi-arc, les extrémités d'arc étant disposées, dans la position d'utilisation de l'ensemble d'angle, de préférence au-dessous du sommet de l'arc.

4. Ensemble d'angle selon l'une quelconque des revendications précédentes, **caractérisé en ce qu'**au moins l'une des pièces d'extrémité (2) est conçue comme des butées finales, de préférence avec des extrémités formées de façon approximativement cylindrique et avec des saillies (3) de préférence triangulaires pour l'encliquetage dans des évidements périphériques de tuyau (6).

5. Combinaison d'au moins un ensemble d'angle selon l'une quelconque des revendications précédentes et de pièces de liaison de préférence tubulaires, **caractérisé en ce que** chacune des pièces de liaison présente sur au moins l'une de ses extrémités les évidements périphériques prévus sur l'ensemble d'angle et/ou les saillies prévues sur l'ensemble d'angle, en particulier sur les pièces d'extrémité (2) de l'ensemble d'angle.

6. Ensemble d'angle selon l'une quelconque des revendications précédentes, **caractérisé en ce qu'**au moins les liaisons articulées (4) sont disposées en forme d'étoile sur le tube principal (1).

7. Ensemble d'angle selon l'une quelconque des revendications précédentes, **caractérisé en ce qu'**au moins une des liaisons articulées (4) est disposée de façon amovible sur le tube principal (1).

8. Ensemble d'angle selon l'une quelconque des revendications précédentes, **caractérisé en ce qu'**au moins l'une des liaisons articulées (4) est conçue de façon verrouillable.

9. Ensemble d'angle selon l'une quelconque des revendications précédentes, **caractérisé en ce qu'**au moins l'un des autres tubes (5) reliés par au moins une des liaisons articulées (4) au tube principal (1) présente un évidement périphérique (6) qui est prévu pour l'encliquetage de la saillie de la pièce d'extrémité (2).
